# FASCICULE DE BREVET EUROPEEN

(11) **EP 0 553 010 B1**
(45) Date de publication et mention de la délivrance du brevet: **06.03.1996**
(21) Numéro de dépôt: 93400098.5
(22) Date de dépôt: 15.01.1993
(51) Int. Cl.: B60T 17/02

(54) **Véhicule automobile électrique comportant un dispositif d'entraînement d'une pompe rotative à vide pour un amplificateur pneumatique d'un système de freinage**
Elektrisch angetriebenes Kraftfahrzeug mit Antriebseinrichtung einer Vakuum-Rotationspumpe für einen pneumatischen Bremskraftverstärker
Electrically driven vehicle comprising rotary vacuum pump driving device for pneumatic brake booster

(30) Priorité: 24.01.1992 FR 9200775
(43) Date de publication de la demande: 28.07.1993
(73) Titulaire: AUTOMOBILES PEUGEOT, F-75116 Paris (FR); AUTOMOBILES CITROEN, F-92200 Neuilly sur Seine (FR)
(72) Inventeur: Leroy, Philippe, F-25200 Montbeliard (FR)
(74) Mandataire: Durand, Yves Armand Louis

(56) Documents cités:
- EP-A- 0 085 721
- DE-A- 3 150 119
- GB-A- 2 083 865

## Description

La présente invention se rapporte à un véhicule automobile comportant un dispositif d'entraînement d'une pompe rotative à vide pour un amplificateur pneumatique par example pour le système de freinage du véhicule automobile.

On sait que les systèmes de freinage de véhicules automobiles comportent généralement un amplificateur pneumatique qui permet d'augmenter la force transmise par le système hydraulique aux organes de freinage du véhicule. Ces amplificateurs pneumatiques sont reliés à une source de dépression, telle une pompe rotative à vide. La pompe rotative à vide est raccordée soit directement soit par l'intermédiaire d'un mécanisme de liaison, à un arbre de sortie du moteur de propulsion ou principal du véhicule. Ainsi, la vitesse de rotation de la pompe à vide est proportionnelle au régime du moteur du véhicule. Puisque dans le cas de véhicules propulsés à l'aide d'un moteur à combustion interne ce dernier fonctionne en permanence et au moins à son régime de ralenti durant toute utilisation du véhicule, il est possible d'assurer à tout instant une dépression (et donc une puissance de freinage) suffisante au regard des impératifs de sécurité en vigueur.

Le document EP-A-0 085 721 décrit une pompe à vide entraînée directement par le démarreur d'un véhicule à moteur thermique afin d'éviter d'actionner continuement la pompe pendant le fonctionnement du moteur.

Par contre, dans le cas de véhicules électriques, si la vitesse de déplacement du véhicule est faible ou nulle, le régime du moteur diminue en proportion, de sorte que la vitesse de rotation de l'axe de la pompe à vide peut devenir inférieure au régime limite minimum en deçà duquel un freinage suffisamment puissant ne peut plus être assuré.

On connaît également d'après le document DE-A-3 150 119 un ensemble électropompe à vide indépendant de la commande par moteur d'un véhicule automobile, conforme au préambule de la revendication 1.

Aussi, la présente invention a pour but de proposer un véhicule automobile comportant un dispositif d'entraînement de pompe à vide économique et simple, grâce auquel une dépression suffisante est constamment fournie à l'amplificateur pneumatique, qu'elle que soit la vitesse de déplacement, et par conséquent, le régime du moteur principal, du véhicule.

A cet effet, l'invention a pour objet un véhicule automobile comportant un dispositif d'entraînement d'une pompe rotative à vide reliée à un amplificateur pneumatique, par exemple pour le système de freinage du véhicule, un moteur principal permettant d'entraîner en rotation au moins une roue motrice du véhicule, et un moteur électrique auxiliaire raccordé à la pompe, caractérisé en ce que le moteur principal est un moteur électrique, et en ce que le dispositif d'entraînement comporte un mécanisme de liaison entre la pompe et le moteur principal, un embrayage à commande électrique interposé entre la pompe et le mécanisme de liaison, ainsi qu'un capteur de vitesse du véhicule en fonction de l'état duquel l'embrayage ou le moteur auxiliaire est activé de façon que la pompe soit constamment entraînée par l'un ou l'autre desdits moteurs.

Le véhicule est aussi caractérisé en ce que la pompe et le moteur auxiliaire sont raccordés par l'intermédiaire d'une roue libre apte à désolidariser le moteur auxiliaire quand la pompe est entraînée par le moteur principal.

Suivant une autre caractéristique de l'invention, le mécanisme de liaison comporte une poulie d'entrée fixée sur un arbre de sortie du moteur principal, une poulie de sortie solidaire d'un axe de rotation de la pompe à vide et une courroie sans fin en prise avec les poulies d'entrée et de sortie.

Suivant encore une autre caractéristique de l'invention, l'embrayage précité est un embrayage électromagnétique normalement en prise et monté sur la poulie de sortie du mécanisme de liaison.

L'invention se caractérise encore en ce que l'axe de rotation de la pompe à l'une de ses extrémités raccordées à l'embrayage et l'autre de ses extrémités au moteur auxiliaire.

En outre, le dispositif peut comporter des moyens électroniques de commande tels qu'ordinateur ou analogue, reliés au capteur de vitesse du moteur auxiliaire et à l'embrayage, ces moyens étant aptes à déclencher l'entrée en prise de l'embrayage dès que la vitesse mesurée par le capteur dépasse un seuil prédéterminé, et à mettre en marche le moteur auxiliaire lorsque la vitesse du véhicule est inférieure à ce seuil.

On précisera ici que le seuil précité de vitesse du véhicule correspond au régime limite minimum de rotation de la pompe à vide lorsqu'elle est entraînée par le moteur principal.

Le véhicule se caractérise encore en ce que le capteur est disposé sur une commande d'un indicateur tachymétrique du véhicule, et est sensible aux impulsions générées par cette commande.

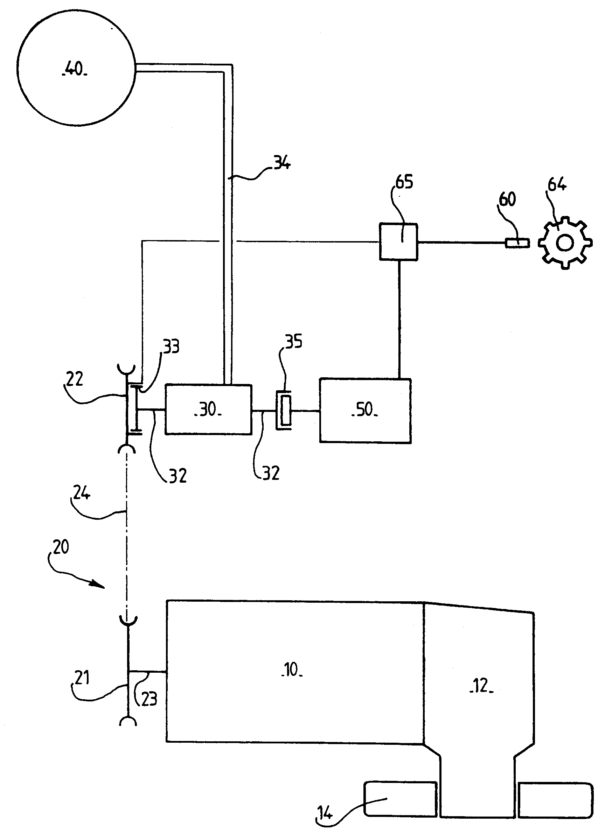

Mais d'autres caractéristiques et avantages de l'invention ressortiront mieux de la description détaillée d'un mode de réalisation, donné uniquement à titre d'exemple, qui suit et se réfère à la figure unique ci-annexée.

Cette figure est une vue schématique d'une partie d'un véhicule automobile à moteur électrique conforme à la présente invention.

Sur la figure unique, la référence numérique 10 désigne un moteur de propulsion électrique dit moteur principal. Le moteur principal 10 est monté sur un véhicule automobile de façon à pouvoir entraîner en rotation une roue motrice 14, par l'intermédiaire d'un boîtier de transmission 12.

La référence numérique 23 désigne un arbre de sortie du moteur principal 10 qui est raccordé à une pompe rotative à vide 30. Plus précisément, un mécanisme de liaison 20 est monté entre l'arbre de sortie 23 du moteur principal 10 et un axe rotatif 32 de la pompe 30, de sorte que la pompe 30 puisse être entraînée en rotation par le moteur 10.

Une conduite 34 relie la pompe 30 à un amplificateur pneumatique de freinage 40. Bien que ceci ne soit pas représenté, l'amplificateur pneumatique 40 est raccordé à un système de freinage du véhicule apte à s'opposer à la rotation d'au moins une roue du véhicule, telle que celle désignée en 14. Evidemment, l'amplificateur pneumatique 40 ainsi que le moteur électrique principal 10 peuvent, selon les cas, agir sur l'une ou plusieurs des roues du véhicule.

On comprend que le moteur principal 10 permet d'entraîner en rotation d'une part une roue motrice 14 du véhicule et d'autre part la pompe à vide 30 dont le fonctionnement permet de générer dans la conduite 34 et l'amplificateur 40 une dépression grâce à laquelle un signal de commande provenant d'un organe tel que pédale de frein peut être amplifié afin d'obtenir un freinage suffisamment puissant.

Conformément à l'invention, la pompe à vide 30 est entraînée par un dispositif qui comporte, outre le mécanisme de liaison 20, un embrayage à commande électrique 33 interposé entre l'axe 32 de la pompe 30 et le mécanisme 20, un moteur électrique auxiliaire 50 qui est également raccordé à la pompe 30, et un capteur de vitesse du véhicule 60 en fonction de l'état duquel l'embrayage 33 ou le moteur auxiliaire 50 sont activés pour que la pompe 30 soit constamment entraînée soit par le moteur principal 10, soit par le moteur auxiliaire 50.

Afin de ne pas entraîner inutilement en rotation le moteur électrique auxiliaire 50 lorsque la pompe 30 est entraînée par le moteur principal 10, cette dernière est raccordée au moteur auxiliaire 50 par l'intermédiaire d'une roue libre 35. Grâce à la roue 35, le moteur 50 est désolidarisé de la pompe 30 lorsque sa vitesse de rotation est inférieure à celle de la pompe.

On remarque sur les figures que le mécanisme de liaison 20 comporte une poulie d'entrée 21 qui est fixée sur l'arbre de sortie 23 du moteur principal 10. Une courroie sans fin 24 est prévue aussi dans le mécanisme 20 de façon à mettre en prise la poulie d'entrée 21 avec une poulie de sortie 22 qui est solidaire de l'axe de rotation 32 de la pompe à vide 30. Suivant l'exemple illustré, l'embrayage 33 qui est un embrayage normalement en prise, est monté sur la poulie de sortie 22 du mécanisme de liaison 20. Par l'expression "normalement en prise", on entend que l'embrayage 33 rend le moteur principal 10 et la pompe à vide 30 solidaires lorsqu'il est dans son état non-activé ou de repos. Cette disposition dans laquelle l'embrayage est alimenté uniquement dans sa phase de désaccouplement d'avec le moteur 10 permet d'améliorer le rendement global du dispositif, de même que la présente de la roue libre 35. L'axe de rotation 32 fait également saillie du côté de la pompe 30 qui est opposé à l'embrayage 33. De fait, l'une des extrémités de l'axe de rotation 32 est raccordée au mécanisme de liaison 20, tandis que son autre extrémité est solidaire de la roue libre 35, et donc du moteur auxiliaire 50.

On a désigné en 65 un circuit électronique de commande relié d'une part au capteur 60 qui est disposé sur une commande 64 d'un indicateur tachymétrique (non représenté) du véhicule. Le capteur 60 est de tout type conventionnel et sensible aux impulsions générées par la commande 64 de l'indicateur tachymétrique. D'autre part, le circuit de commande 65 est relié au moteur auxiliaire 50 et à l'embrayage 33. On notera ici que l'embrayage 33 sera de préférence un embrayage électromagnétique de type connu.

Le fonctionnement du véhicule conforme à l'invention est le suivant. Lorsque le véhicule équipé du dispositif qui vient d'être décrit se déplace, le capteur 60 mesure en permanence la vitesse de ce déplacement, et fournit au circuit de commande 65 un signal proportionnel à cette vitesse.

Lorsque la vitesse mesurée par le capteur 60 est supérieure à un seuil prédéterminé qui correspond au régime limite minimum de rotation de la pompe à vide 30 lorsqu'elle est entraînée par le moteur principal 10, l'embrayage 33 n'est pas alimenté en courant électrique, il est donc en prise avec le mécanisme de liaison 20, et avec le moteur principal 10. De fait, quand la vitesse de rotation de l'arbre de sortie 23 du moteur 10 est suffisante, la pompe à vide 30 est entraînée en rotation par le moteur principal.

Si la vitesse détectée par le capteur 60 devient inférieure au seuil prédéterminé, le circuit 65 commande, en premier lieu, l'alimentation de l'embrayage 33 de façon à provoquer le désaccouplement de ce dernier et du mécanisme de liaison 20 et, ensuite, la mise en marche du moteur auxiliaire 50. Ainsi, durant tout le temps où le moteur principal 10 aura une vitesse de rotation faible ou nulle, la pompe à vide 30 sera entraînée uniquement par le moteur auxiliaire 50.

Inversement, lorsque la vitesse détectée par le capteur 60 redeviendra supérieure à la valeur de seuil, le circuit 65 interrompra l'alimentation du moteur 50 et de l'embrayage 33. Ce dernier se retrouvera donc en prise avec le mécanisme de liaison 20, de sorte que la pompe à vide sera de nouveau entraînée par le moteur principal.

On a donc obtenu conformément à l'invention un dispositif d'entraînement d'une pompe à vide pour véhicule automobile à moteur électrique qui permet d'assurer constamment une dépression suffisante dans l'amplificateur de freinage, tout en minimisant au maximum la consommation d'énergie de ce dispositif d'entraînement, contrairement aux systèmes où la pompe à vide est accouplée à un moteur électrique auxiliaire qui fonctionne en permanence.

## Revendications

1. Véhicule automobile comportant un dispositif d'entraînement d'une pompe rotative à vide (30) reliée à un amplificateur pneumatique (40), par exemple pour le système de freinage du véhicule, un moteur principal (10) permettant d'entraîner en rotation au moins une roue motrice (14) du véhicule, et un moteur électrique auxiliaire (50) raccordé à la pompe (30), caractérisé en ce que le moteur principal (10) est un moteur électrique, et en ce que le dispositif d'entraînement comporte un mécanisme de liaison (20) entre la pompe et le moteur principal, un embrayage à commande électrique (33) interposé entre la pompe (30) et le mécanisme de liaison (20), ainsi qu'un capteur de vitesse du véhicule (60) en fonction de l'état duquel l'embrayage (33) ou le moteur auxiliaire (50) est activé afin que la pompe soit constamment entraînée par l'un ou l'autre desdits moteurs (10; 50).

2. Véhicule selon la revendication 1, caractérisé en ce que la pompe et le moteur auxiliaire sont raccordés par l'intermédiaire d'une roue libre (35) apte à désolidariser le moteur auxiliaire (50) quand la pompe (30) est entraînée par le moteur principal.

3. Véhicule selon la revendication 1 ou 2, caractérisé en ce que le mécanisme de liaison (20) comporte une poulie d'entrée (21) fixée sur un arbre de sortie (23) du moteur principal, une poulie de sortie (22) solidaire d'un axe de rotation (32) de la pompe à vide (30) et une courroie sans fin (24) en prise avec les poulies d'entrée (21) et de sortie (22).

4. Véhicule selon la revendication 3, caractérisé en ce que l'embrayage (33) précité est un embrayage électromagnétique et normalement en prise, monté sur la poulie de sortie (22) du mécanisme de liaison (20).

5. Véhicule selon la revendication 3 ou 4, caractérisé en ce que l'axe de rotation (32) de la pompe (30) à l'une de ses extrémités raccordée à l'embrayage (33) et l'autre de ses extrémités au moteur auxiliaire (50).

6. Véhicule selon l'une des revendications 1 à 5, caractérisé en ce que le dispositif comporte des moyens électroniques de commande (65) tels qu'ordinateur ou analogue, reliés au capteur de vitesse (60), au moteur auxiliaire (50) et à l'embrayage (33), ces moyens (65) étant aptes à déclencher l'entrée en prise de l'embrayage (33) dès que la vitesse mesurée par le capteur (60) dépasse un seuil prédéterminé, et à mettre en marche le moteur auxiliaire (50) lorsque la vitesse du véhicule est inférieure à ce seuil.

7. Véhicule selon la revendication 6, caractérisé en ce que le seuil précité de vitesse du véhicule correspond à un régime limite minimum de rotation de la pompe à vide (30) lorsqu'elle est entraînée par le moteur principal (10).

8. Véhicule selon l'une des revendications 1 à 7, caractérisé en ce que le capteur (60) est disposé sur une commande (64) d'un indicateur tachymétrique du véhicule, et est sensible aux impulsions générées par cette commande.

## Claims

1. Automotive vehicle comprising a device for driving a rotary vacuum pump (30) connected to a pneumatic amplifier (40) for example for the braking system of the vehicle, a main motor (10) permitting to rotate at least one driving wheel (14) of the vehicle and an auxiliary electric motor (50) connected to the pump (30), characterized in that the main motor (10) is an electric motor and in that the drive system comprises a connecting mechanism (20) between the pump and the main motor, an electrically operated clutch (33) interposed between the pump (30) and the connecting mechanism (20) as well as a sensor (60) for the speed of the vehicle in accordance with the state of which the clutch (33) or the auxiliary motor (50) is activated in order that the pump be constantly driven by either one of the said motors (10;50).

2. Vehicle according to claim 1, characterized in that the pump and the auxiliary motor are connected through the medium of a free wheel (35) adapted to disconnect the auxiliary motor (50) when the pump (30) is driven by the main motor.

3. Vehicle according to claim 1 or 2, characterized in that the connecting mechanism (20) comprises an input pulley (21) fastened onto an output shaft (23) of the main motor, an output pulley (22) made fast to a rotary shaft (32) of the vacuum pump (30) and an endless belt (24) in engagement with the input and output pulleys (21) and (22).

4. Vehicle according to claim 3, characterized in that the aforesaid clutch (33) is an electromagnetic and normally engaged clutch mounted on the output pulley (22) of the connecting mechanism (20).

5. Vehicle according to claim 3 or 4, characterized in that the rotary shaft (32) of the pump (30) has one of its ends connected to the clutch (33) and the other one of its ends connected to the auxiliary motor (50).

6. Vehicle according to one of claims 1 to 5, characterized in that the device comprises electronic control means (65) such as a computer or the like, connected to the speed sensor (60), to the auxiliary motor (50) and to the clutch (33), these means (65) being adapted to operate the engagement of the clutch (33) as soon as the speed measured by the sensor (60) exceeds a predetermined threshold and to start the auxiliary motor (50) when the speed of the vehicle is lower than this threshold.

7. Vehicle according to claim 6, characterized in that the aforesaid speed threshold of the vehicle corresponds to a minimum limit rate of rotation of the vacuum pump (30) when it is driven by the main motor (10).

8. Vehicle according to one of claims 1 to 7, characterized in that the sensor (60) is disposed onto one control (64) of a tachometric indicator of the vehicle and is sensitive to the pulses generated by this control.

## Patentansprüche

1. Kraftfahrzeug mit einer Vorrichtung zum Antreiben einer mit einem pneumatischen Verstärker (40) verbundenen drehbaren Vakuumpumpe (30) z.B. für das Bremssystem des Fahrzeuges, einem den Drehantrieb von wenigstens einem Triebrad (14) des Fahrzeuges gestattenden Hauptmotor (10) und einem mit der Pumpe (30) verbundenen Hilfsmotor (50), dadurch gekennzeichnet, dass der Hauptmotor (10) ein elektrischer Motor ist und dass die Antriebsvorrichtung einen Verbindungsmechanismus (20) zwischen der Pumpe und dem Hauptmotor, eine zwischen der Pumpe (30) und dem Verbindungsmechanismus (20) zwischengefügte Kupplung mit elektrischer Steuerung (33), sowie einen Meßwertgeber (60) der Geschwindigkeit des Fahrzeuges aufweist, in der Abhängigkeit von dessen Zustand die Kupplung (33) oder der Hilfsmotor (50) betrieben wird, damit die Pumpe durch den einen oder den anderen der besagten Motoren (10 ; 50) ständig angetrieben wird.

2. Fahrzeug nach Anspruch 1, dadurch gekennzeichnet, dass die Pumpe und der Hilfsmotor über einen Freilauf (35) verbunden sind, der geeignet ist, den Hilfsmotor (50) abzutrennen, wenn die Pumpe (30) durch den Hauptmotor angetrieben wird.

3. Fahrzeug nach Anspruch 1 oder 2, dadurch gekennzeichnet, dass der Verbindungsmechanismus (20) eine an der Ausgangswelle (23) des Hauptmotors befestigte Eingangsriemenscheibe (21), eine mit einer Drehwelle (32) der Vakuumpumpe (30) fest verbundene Ausgangsriemenscheibe (22) und einen mit der Eingangs- und Ausgangsscheibe (21) und (22) im Eingriff stehenden endlosen Riemen (24) aufweist.

4. Fahrzeug nach Anspruch 3, dadurch gekennzeichnet, dass die vorgenannte Kupplung (33) eine elektromagnetische und normalerweise eingerückte, an der Ausgangsriemenscheibe (22) des Verbindungsmechanismus (20) angeordnete Kupplung ist.

5. Fahrzeug nach Anspruch 3 oder 4, dadurch gekennzeichnet, dass die Drehwelle (32) der Pumpe (30) an einem ihrer Enden mit der Kupplung (33) und an dem anderen ihrer Enden mit dem Hilfsmotor (50) verbunden ist.

6. Fahrzeug nach einem der Ansprüche 1 bis 5, dadurch gekennzeichnet, dass die Vorrichtung mit dem Geschwindigkeitsmeßwertgeber (60), mit dem Hilfsmotor (50) und mit der Kupplung (33) verbundene elektronische Steuermittel (65), wie einen Rechner oder dergleichen aufweist, wobei diese Mittel (65) geeignet sind, das Einrücken der Kupplung (33) auszulösen, sobald die durch den Meßwertgeber (60) gemessene Geschwindigkeit eine vorbestimmte Schwelle überschreitet und den Hilfsmotor (50) in Betrieb zu setzen, wenn die Geschwindigkeit des Fahrzeuges niedriger als diese Schwelle ist.

7. Fahrzeug nach Anspruch 6, dadurch gekennzeichnet, dass die vorgenannte Geschwindigkeitsschwelle des Fahrzeuges einer minimalen Grenzdrehgeschwindigkeit der Vakuumpumpe (30) entspricht, wenn sie durch den Hauptmotor (10) angetrieben wird.

8. Fahrzeug nach einem der Ansprüche 1 bis 7, dadurch gekennzeichnet, dass der Meßwertgeber (60) an einem Betätigungsmittel (64) eines Geschwindigkeitsanzeigers des Fahrzeuges angeordnet und gegen durch dieses Betätigungsmittel erzeugte Impulse empfindlich ist.
